# FASCICULE DE BREVET EUROPEEN

(11) **EP 2 414 199 B1**
(45) Date de publication et mention de la délivrance du brevet: **12.03.2014**
(21) Numéro de dépôt: 10716385.9
(22) Date de dépôt: 12.03.2010
(51) Int. Cl.: B60R 19/24, B62D 65/16

(54) **GABARIT DE POSITIONNEMENT ET PROCEDE DE MISE EN PLACE D'UN PARE-CHOCS AVANT DE VEHICULE AUTOMOBILE**
POSITIONIERUNGSWERKZEUG SOWIE POSITIONIERUNGSVERFAHREN EINES VORDEREN STOSSFÄNGER FÜR KRAFTFAHRZEUG
MOUNTING FIXTURE AND METHOD OF POSITIONING A MOTOR VEHICLE FRONT BUMPER

(30) Priorité: 02.04.2009 FR 0952152
(43) Date de publication de la demande: 08.02.2012
(73) Titulaire: Peugeot Citroën Automobiles SA, 78140 Vélizy Villacoublay (FR); GM Global Technology Operations LLC, Detroit, MI 48265 (US)
(72) Inventeur: GION, Frédéric, F-78140 Velizy-Villacoublay (FR)
(74) Mandataire: Fosse, Danièle
(86) Numéro de dépôt international: PCT/FR2010/050430
(87) Numéro de publication internationale: WO 2010/112723

(56) Documents cités:
- JP-A- 4 173 486
- JP-A- 2004 276 202
- KR-A- 20010 055 584
- US-A1- 2003 070 277

## Description

La présente invention concerne un gabarit de positionnement et un procédé de mise en place d'un pare-chocs avant de véhicule automobile, du type comprenant une poutre de pare-chocs et une peau de pare-chocs fixée par rapport à la poutre.

On connaît des pare-chocs avant de véhicule automobile comprenant une peau de pare-chocs fixée sur la structure du véhicule automobile par exemple par encliquetage.

Le document JP 4 173486 A divulgue un gabarit de positionnement et de montage d'équerres de maintien d'un pare-chocs de véhicule automobile, l'équerre étant fixée sur une poutre, l'équerre maintenant la peau de pare-chocs. Ledit gabarit est adapté pour positionner la ou chaque équerre suivant une première direction et une deuxième direction, les deux directions étant perpendiculaires l'une par rapport à l'autre, le gabarit comprenant des organes d'immobilisation du gabarit sur l'élément de référence suivant les première et deuxième directions.

Néanmoins, la peau de pare-chocs tend à s'affaisser avec le temps.

Un but de l'invention est de fiabiliser la fixation de la peau de pare-chocs sur la structure du véhicule.

L'invention a pour objet un gabarit de positionnement et de montage d'équerres de maintien d'un pare-chocs tel que défini ci-dessus, le gabarit étant adapté pour :
- positionner la ou chaque équerre suivant une première direction et une deuxième direction, les deux directions étant perpendiculaires l'une par rapport à l'autre, le gabarit comprenant :
   - un système de préhension et de maintien des équerres ;
   - des organes d'immobilisation du gabarit sur l'élément de référence suivant les première et deuxième directions ; et
- orienter la ou chaque équerre de maintien par rapport aux première et deuxième directions et par rapport à une troisième direction perpendiculaire aux première et deuxième directions.

Suivant des modes particuliers de réalisation, le gabarit comporte une ou plusieurs des caractéristiques suivantes, prise(s) isolément ou suivant toutes les combinaisons techniquement possibles :
- le gabarit permet un débattement en translation de chaque équerre de maintien suivant ladite troisième direction, les organes d'immobilisation du gabarit sur le véhicule assurant l'immobilisation du gabarit suivant la troisième direction ;
- le gabarit comprend au moins deux poignées de saisie s'étendant de préférence verticalement ;
- le système de préhension et de maintien comprend une mâchoire de préhension des équerres, la mâchoire de préhension possédant une configuration serrée de préhension de l'équerre et une configuration desserrée de libération de l'équerre, le système de préhension et de maintien comprenant un mécanisme d'actionnement de la mâchoire de préhension entre les configurations serrée et desserrée, la mâchoire de préhension comprenant de préférence deux branches opposées montées rotatives ;
- le mécanisme d'actionnement comprend un levier d'actionnement de la mâchoire de préhension vers sa configuration desserrée et des moyens de sollicitation élastique de la mâchoire de préhension vers sa configuration serrée ;
- le levier d'actionnement s'étend à une distance de la poignée de telle sorte qu'il puisse être saisi par les doigts de la main d'un opérateur tout en maintenant la paume de la main sur la poignée ;
- les organes d'immobilisation comprennent deux pions d'indexage adaptés pour coopérer avec des orifices correspondants de l'élément de référence du véhicule, les pions d'indexage étant de préférence verticaux et faisant de préférence saillie vers le bas par rapport à une surface d'appui sur l'élément de référence ; et
- les organes d'immobilisation comprennent deux plaques d'appui suivant les première et troisième directions.

L'invention a encore pour objet un procédé de mise en place d'équerres de maintien d'un pare-chocs tel que défini ci-dessus, comprenant une étape de positionnement des équerres sur la poutre de pare-chocs, l'étape de positionnement étant réalisée au moyen d'un gabarit tel que défini ci-dessus.

Suivant un mode particulier de réalisation, le procédé comprend une étape de positionnement du gabarit sur une cassette d'un Groupe Moto-Ventilé du véhicule.

L'invention sera mieux comprise à la lecture de la description qui va suivre, donnée uniquement à titre d'exemple et faite en se référant aux dessins annexés, sur lesquels :
- la figure 1 est une vue avant en perspective d'une partie avant d'un véhicule automobile, comprenant un pare-chocs ;
- la figure 2 est une vue analogue d'un gabarit de positionnement et de montage selon l'invention du pare-chocs de la figure 1, le gabarit étant illustré sur la figure 1 ;
- la figure 3 est une vue agrandie d'une section suivant le plan III de la figure 2 ;
- la figure 4 est une vue analogue d'une section suivant le plan IV de la figure 2 ; et
- la figure 5 est une vue schématique en coupe du pare-chocs de la figure 1 après assemblage.

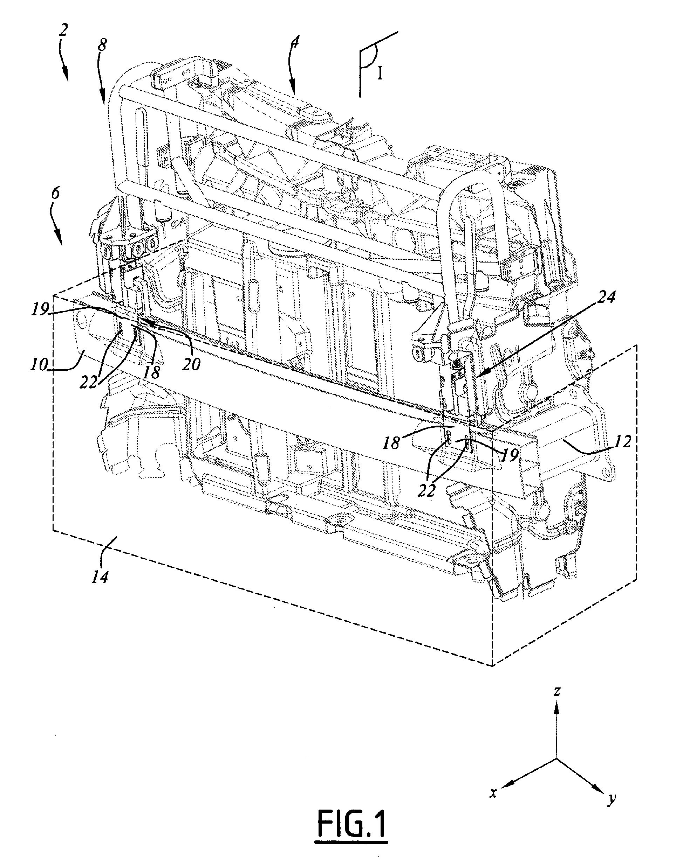

La figure 1 illustre une partie avant 2 de véhicule automobile comprenant une cassette GMV (Groupe moto-ventilé) 4, différents éléments d'un pare-chocs avant 6 et un gabarit 8 de positionnement et de montage du pare-chocs 6.

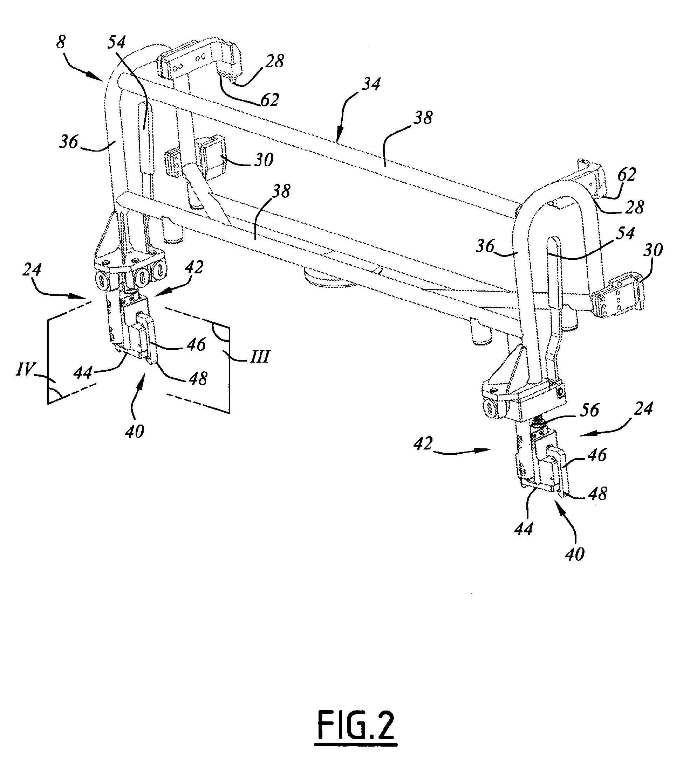

Le gabarit 8 est illustré plus en détail sur les figures 2 à 4 et sera décrit ci-dessous.

Dans tout ce qui suit, les termes "horizontal", "vertical", "longitudinal", "transversal", "gauche", "droit", "supérieur", "inférieur", "haut", et "bas", s'entendent par rapport au repère orthogonal usuel d'un véhicule automobile comprenant :
- un axe X longitudinal et horizontal orienté de l'arrière vers l'avant ;
- un axe Y transversal et horizontal orienté de la droite vers la gauche ; et
- un axe Z vertical, orienté du bas vers le haut.

Le pare-chocs avant 6 comprend une poutre transversale de pare-chocs 10 fixée à ses extrémités transversales sur deux absorbeurs longitudinaux de chocs 12.

Le pare-chocs 6 comprend également une peau de pare-chocs 14 dont le contour a été représenté sur la figure 1 de façon schématique et en trait mixte.

La peau de pare-chocs 14 est fixée sur la structure du véhicule par exemple par encliquetage ou rivetage. Elle est par exemple constituée de matière plastique ou de tôle.

En outre, le pare-chocs 6 comprend deux équerres 18 gauche et droite de maintien de la peau 14.

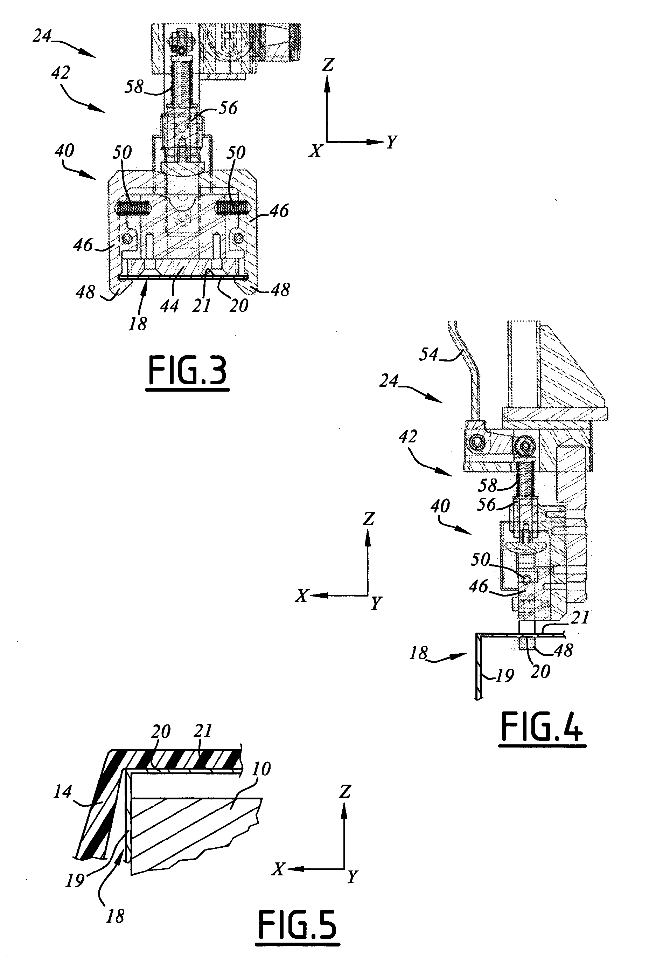

Chaque équerre 18 a une section longitudinale en forme de L. Chacune des équerres 18 comprend une plaque verticale 19 de fixation sur la poutre 10 et une plaque horizontale 20 présentant une surface supérieure horizontale 21 de soutien de la peau de pare-chocs 14. Après montage, la peau 14 est en appui plan sur la surface de soutien 21 de chaque équerre 18. La position définitive de la peau 14 sur l'équerre 18 après fixation des équerres 18 sur la poutre 10, est illustrée sur la figure 5.

Les équerres 18 sont positionnées de façon symétrique entre elles par rapport à un plan longitudinal vertical médian I du véhicule. Chaque équerre 18 est vissée sur la poutre 10 au moyen de deux vis (non représentées) coopérant avec des trous correspondants ménagés dans la poutre 10. A cet effet, chaque équerre 18 comprend deux fentes verticales 22 prévues dans la plaque verticale 19 et permettant un ajustement vertical du positionnement de l'équerre 18 par rapport à la poutre 10.

Le gabarit 8 assure le positionnement et l'orientation des équerres 18 lors du montage de celles-ci sur la poutre 10.

A cet effet, le gabarit 8 comprend un système 24 de préhension et de maintien des équerres 18 ainsi que divers organes d'immobilisation du gabarit 8 suivant les trois directions X, Y et Z sur la cassette GMV 4.

La structure du gabarit 8 est composée d'un cadre rigide 34 formant deux poignées verticales 36 et deux traverses horizontales 38 reliant rigidement les deux poignées 36.

Chaque poignée 36 est prolongée rigidement vers le bas par le système 24 de préhension et de maintien d'une équerre 18 correspondante et vers l'arrière par les organes d'immobilisation 28, 30.

Chacun des systèmes de préhension 24 comprend une mâchoire de préhension 40 (voir figures 2 à 4) et un mécanisme d'actionnement 42 de la mâchoire 40.

La mâchoire 40 possède une configuration serrée de maintien de l'équerre 18 contre une plaque horizontale de positionnement 44 et une configuration desserrée de libération de l'équerre 18. La plaque 44 est fixe par rapport au cadre 34.

En configuration serrée, la mâchoire 40 assure le positionnement de l'équerre 18 par rapport au cadre 34 du gabarit 8 suivant les directions Y et Z, et en appui plan horizontal XY contre la plaque 44. Le gabarit assure à la fois l'orientation de l'équerre 18 de telle sorte que la surface de soutien 21 s'étende suivant un plan horizontal XY et le positionnement vertical de la surface de soutien 21. En outre, le système de préhension et de maintien 24 permet le débattement en translation suivant X de l'équerre 18 contre la plaque 44, de façon à faciliter le vissage des équerres 18 suivant la direction X.

Un débattement selon Y de l'équerre est également envisageable, en prévoyant par exemple une largeur interne mesurée suivant Y de la mâchoire 40 supérieure à la largeur de l'équerre 18, de façon à permettre un alignement suivant Y des fentes 22 avec les trous de vissage de la poutre 10.

La mâchoire 40 comprend deux branches 46 montées rotatives autour de l'axe X et comprenant à leur extrémité inférieure une dent 48 de serrage de l'équerre 18.

Les deux branches 46 forment la mâchoire 40.

Chaque branche 46 est sollicitée par un ressort 50 vers la configuration serrée de la mâchoire 40.

Le mécanisme d'actionnement 42 est adapté pour actionner la mâchoire 40 entre ses configurations serrée et desserrée. Il comprend à cet effet un levier d'actionnement 54 monté rotatif autour de l'axe Y et un poussoir vertical 56 monté mobile entre une position haute, et une position abaissée de desserrage de la mâchoire 40.

Le poussoir 56 est sollicité vers sa position abaissée par un ressort 58.

Le levier d'actionnement 54 appuie sur une extrémité supérieure du poussoir 56 et est adapté pour enfoncer le poussoir 56 jusqu'à sa position abaissée.

Le levier d'actionnement 54 s'étend à une distance de la poignée correspondante 36 de telle sorte qu'il puisse être saisi par les doigts de la main de l'opérateur tout en maintenant la paume de la main sur la poignée 36, c'est-à-dire par exemple inférieure à 15 cm. Le levier s'étend ainsi sensiblement parallèlement à la poignée 56.

Les organes d'immobilisation 28, 30 du gabarit 8 comprennent deux pions verticaux d'indexage 28 positionnés de part et d'autre du gabarit 8, ainsi que deux plaques 30 d'appui.

Les pions 28 ont une forme sensiblement cylindrique et sont adaptés pour coopérer avec des trous correspondants prévus dans la cassette 4. Ils sont symétriques entre eux par rapport à un plan longitudinal médian du gabarit 8. Les pions 28 font saillie vers le bas par rapport à une surface horizontale d'appui 62 sur la cassette 4. A cet effet, la cassette 4 présente une surface horizontale de support correspondante.

Les plaques 30 d'appui sont adaptées pour prendre place de part et d'autre de la cassette 4 et prendre appui selon la cassette 4 suivant les directions X et Y. Les plaques 30 assurent le guidage en translation suivant Z du gabarit 8 par rapport à la cassette 4.

Le gabarit 8 a de préférence un poids total inférieur ou égal à 8 kg, par exemple environ égal à 5,5 kg.

Pour une mise en place des équerres de maintien 18 sur la poutre 10, l'opérateur actionne d'abord les deux leviers d'actionnement 54 afin de desserrer les mâchoires 40 et de positionner les équerres 18 contre les plaques de positionnement 44. L'opérateur relâche ensuite chaque levier d'actionnement 54. Les ressorts 50 sollicitent la mâchoire 40 vers sa configuration serrée.

Les équerres de maintien 18 sont alors maintenues automatiquement par les mâchoires 40 dans une position prédéterminée précise suivant les directions Y et Z par rapport au cadre 34 et à la plaque 44, en appui plan XY sur la plaque de positionnement 44.

L'opérateur saisit alors les deux poignées verticales 36 et positionne les deux plaques 30 de part et d'autre de la cassette 4 afin de guider le gabarit 8. L'opérateur effectue ensuite une translation du gabarit 8 suivant une direction verticale vers le bas par rapport à la cassette 4, de façon à insérer les pions 28 dans les trous correspondants de la cassette 4.

Une fois les pions 28 insérés, le gabarit est immobilisé par rapport à la cassette 4, en appui sur la cassette 4, et les deux équerres 18 sont dans une position de préfixation.

L'opérateur visse alors les équerres 18 sur la poutre 10 par vissage suivant l'axe X dans les fentes verticales 22.

Une fois la fixation des équerres 18 réalisée, l'opérateur actionne les deux leviers 54. Les poussoirs 56 sont déplacés vers le bas, les deux branches 46 de la mâchoire 40 sont actionnées à l'encontre des ressorts 50 et la mâchoire 40 desserrée.

Chaque mâchoire 40 est alors dans sa configuration de libération et l'opérateur enlève le gabarit 8.

Ensuite, la peau de pare-chocs 14 est fixée sur la structure du véhicule et prend appui librement sur les équerres 18.

Avec l'invention, la fixation de la peau de pare-chocs 14 dans le temps, et notamment son maintien vertical, est assurée par les équerres 18.

Le gabarit 8 assure un positionnement précis et agît comme élément de référence précis des deux équerres 18 par rapport à la cassette GVM 4, et ce malgré les imprécisions relatives au positionnement de la poutre 10 par rapport à cette cassette GVM 4. En effet, la poutre 10 ne peut, en raison d'une accumulation de cotes de tolérance, servir comme élément de référence précis des équerres 18 par rapport à la structure du véhicule. La cassette GMV 4 est néanmoins quant à elle apte à jouer ce rôle de référence de positionnement. Le gabarit 8 permet le positionnement des équerres 18 par référence à la cassette GMV 4.

Le gabarit 8 assure le positionnement simultané des deux équerres 18, ce qui réduit le temps de montage.

Le gabarit 8 est de fabrication simple.

Le gabarit 8 est également de manipulation aisée, grâce aux deux poignées verticales 36 qui assurent un contrôle de la rotation du gabarit 8 autour de l'axe Y et grâce à un poids faible.

Un opérateur peut en effet porter facilement le gabarit 8 à bout de bras.

En outre, le mécanisme d'actionnement 42 des mâchoires de préhension 40 assure une préhension automatique des équerres 18 par relâchement des leviers d'actionnement 54. La préhension assurée par les mâchoires 40 est fiable, notamment grâce à l'action des ressorts 50.

Le ressort 58 assure le maintien du poussoir 56 dans une position stable contre les mâchoires 40 lorsque le levier 54 n'est pas actionné.

En variante, les organes d'immobilisation 28, 30 du gabarit 8 coopèrent avec un autre élément de référence du véhicule que la cassette GMV 4 pour immobiliser le gabarit 8 par rapport à cet autre élément de référence.

En variante également, les équerres 18 sont fixées par d'autres moyens que des vis, par exemple par rivetage, par des reliefs d'encliquetage ou par soudage.

## Revendications

1. Gabarit (8) de positionnement et de montage d'équerres de maintien (18) d'un pare-chocs de véhicule automobile du type comprenant une poutre de pare-chocs (10) et une peau de pare-chocs (14) fixée par rapport à la poutre (10), le pare-chocs (6) comprenant en outre au moins une équerre (18) de maintien, l'équerre (18) étant fixée sur la poutre (10), l'équerre (18) maintenant la peau de pare-chocs (14), le gabarit (8) étant adapté pour :
- positionner la ou chaque équerre (18) suivant une première direction (Y) et une deuxième direction (Z), les deux directions (Y, Z) étant perpendiculaires l'une par rapport à l'autre, le gabarit (8) comprenant:
un système de préhension et de maintien (24) des équerres (18);
des organes d'immobilisation (28, 30) du gabarit (8) sur l'élément de référence (4) suivant les première et deuxième directions (Y,Z); et
- orienter la ou chaque équerre de maintien (18) par rapport aux première et deuxième directions (Y, Z) et par rapport à une troisième direction (X) perpendiculaire aux première et deuxième directions (Y, Z).

2. Gabarit (8) suivant la revendication 1, dans lequel le gabarit (8) permet un débattement en translation de chaque équerre de maintien (18) suivant ladite troisième direction (X), les organes d'immobilisation (28,30) du gabarit (8) sur le véhicule assurant l'immobilisation du gabarit (8) suivant la troisième direction (X).

3. Gabarit (8) suivant les revendications 1 ou 2, dans lequel le gabarit (8) comprend au moins deux poignées de saisie (36) s'étendant de préférence verticalement.

4. Gabarit (8) suivant l'une quelconque des revendications 1 à 3, dans lequel le système de préhension et de maintien (24) comprend une mâchoire de préhension (40) des équerres (18), la mâchoire de préhension (40) possédant une configuration serrée de préhension de l'équerre (18) et une configuration desserrée de libération de l'équerre (18), le système de préhension et de maintien (24) comprenant un mécanisme d'actionnement (42) de la mâchoire de préhension (40) entre les configurations serrée et desserrée, la mâchoire de préhension (40) comprenant de préférence deux branches (46) opposées montées rotatives.

5. Gabarit (8) suivant la revendication 4, dans lequel le mécanisme d'actionnement (42) comprend un levier d'actionnement (54) de la mâchoire de préhension (40) vers sa configuration desserrée et des moyens de sollicitation élastique (50) de la mâchoire de préhension (40) vers sa configuration serrée.

6. Gabarit (8) suivant la revendication 5 prise ensemble avec la revendication 5, dans lequel le levier d'actionnement (54) s'étend à une distance de la poignée (36) de telle sorte qu'il puisse être saisi par les doigts de la main d'un opérateur tout en maintenant la paume de la main sur la poignée (36).

7. Gabarit (8) suivant l'une quelconque des revendications 1 à 6, dans lequel les organes d'immobilisation (28, 30) comprennent deux pions d'indexage (28) adaptés pour coopérer avec des orifices correspondants de l'élément de référence (4) du véhicule, les pions d'indexage (28) étant de préférence verticaux et faisant de préférence saillie vers le bas par rapport à une surface d'appui (62) sur l'élément de référence (4).

8. Gabarit (8) suivant l'une quelconque des revendications 1 à 7, dans lequel les organes d'immobilisation (28, 30) comprennent deux plaques d'appui (30) suivant les première et troisième directions (Y, X).

9. Procédé de mise en place d'équerres de maintien (18) d'un pare-chocs (6) de véhicule automobile, comprenant une étape de positionnement des équerres (18) sur la poutre de pare-chocs (10), l'étape de positionnement étant réalisée au moyen d'un gabarit (8) selon l'une quelconque des revendications 1 à 8.

10. Procédé selon la revendication 9, comprenant une étape de positionnement du gabarit (8) sur une cassette d'un Groupe Moto-Ventilé (4) du véhicule.

## Patentansprüche

1. Werkzeug (8) zum Positionieren und Montieren von Haltewinkeln (18) eines Stoßfängers für Kraftfahrzeug des Typs, der einen Stoßfängerbalken (10) und eine Stoßfängerverkleidung (14), die in Bezug auf den Balken (10) befestigt ist, aufweist, wobei der Stoßfänger (6) ferner mindestens einen Haltewinkel (18) aufweist, der auf dem Balken (10) befestigt ist, wobei der Haltewinkel (18) die Stoßfängerverkleidung (14) hält, wobei das Werkzeug (8) zu Folgendem angepasst ist:
- Positionieren des oder jedes Winkels (18) entlang einer ersten Richtung (Y) und einer zweiten Richtung (Z), wobei die zwei Richtungen (Y, Z) zueinander senkrecht sind, wobei das Werkzeug (8) Folgendes aufweist:
ein Greif- und Haltesystem (24) der Winkel (18),
Elemente (28, 30) zum Stillstellen des Werkzeugs (8) auf dem Bezugselement (4) entlang der ersten und zweiten Richtung (Y, Z), und
- Ausrichten des oder der Haltewinkel (18) in Bezug auf die erste und zweite Richtung (Y, Z) in Bezug auf eine dritte Richtung (X) senkrecht zu der ersten und der zweiten Richtung (Y, Z).

2. Werkzeug (8) nach Anspruch 1, bei dem das Werkzeug (8) ein Ausschlagen in Verschiebung jedes Haltewinkels (18) entlang der dritten Richtung (X) erlaubt, wobei die Stillstellelemente (28, 30) des Werkzeugs (8) auf dem Fahrzeug das Stillstellen des Werkzeugs (8) entlang der dritten Richtung (X) sicherstellen.

3. Werkzeug (8) nach den Ansprüchen 1 oder 2, wobei das Werkzeug (8) mindestens zwei Griffe (36) aufweist, die sich vorzugsweise vertikal erstrecken.

4. Werkzeug (8) nach einem der Ansprüche 1 bis 3, bei dem das Greif- und Haltesystem (24) eine Greifbacke (40) der Winkel (18) aufweist, wobei die Greifbacke (40) eine gespannte Greifkonfiguration des Winkels (18) und eine gelockerte Freigabekonfiguration des Winkels (18) besitzt, wobei das Greif- und Haltesystem (24) einen Betätigungsmechanismus (42) der Greifbacke (40) zwischen der gespannten und der gelockerten Konfiguration aufweist, wobei die Greifbacke (40) vorzugsweise zwei gegenüberliegende drehend montierte Schenkel (46) aufweist.

5. Werkzeug (8) nach Anspruch 4, bei dem der Betätigungsmechanismus (42) einen Betätigungshebel (54) der Greifbacke (40) zu ihrer gelockerten Konfiguration und Mittel zum elastischen Beanspruchen (50) der Greifbacke (40) zu ihrer gespannten Konfiguration aufweist.

6. Werkzeug (8) nach Anspruch 5, gemeinsam mit Anspruch 5 genommen, bei dem sich der Betätigungshebel (54) in einer Entfernung von dem Griff (36) derart erstreckt, dass er von den Fingern der Hand eines Bedieners erfasst werden kann, während die Handfläche auf dem Griff (36) gehalten wird.

7. Werkzeug (8) nach einem der Ansprüche 1 bis 6, wobei die Stillstellelemente (28, 30) zwei Positionierungsfinger (28) aufweisen, die angepasst sind, mit entsprechenden Öffnungen des Bezugselements (4) des Fahrzeugs zusammenzuwirken, wobei die Positionierungsfinger (28) vorzugsweise vertikal sind und vorzugsweise nach unten in Bezug auf eine Auflageoberfläche (62) auf dem Bezugselement (4) vorstehen.

8. Werkzeug (8) nach einem der Ansprüche 1 bis 7, wobei die Stillstellungselemente (28, 30) Auflageplatten (30) entlang der ersten und dritten Richtung (Y, X) aufweisen.

9. Verfahren zum Anbringen von Haltewinkeln (18) eines Stoßfängers (6) für Kraftfahrzeug, das einen Positionierungsschritt der Winkel (18) auf dem Stoßfängerbalken (10) aufweist, wobei der Positionierungsschritt mittels eines Werkzeugs (8) nach einem der Ansprüche 1 bis 8 ausgeführt wird.

10. Verfahren nach Anspruch 9, das einen Positionierungsschritt des Werkzeugs (8) auf einer Kassette eines motorisch belüfteten Aggregats (4) des Fahrzeugs aufweist.

## Claims

1. A positioning and mounting fixture (8) of supporting brackets (18) of a motor vehicle bumper, of the type including a bumper beam (10) and a bumper skin (14) fixed relative to the beam (10), the bumper (6) including in addition at least one supporting bracket (18), the bracket (18) being fixed on the beam (10), the beam (18) supporting the bumper skin (14), the fixture (8) being adapted for:
- positioning the or each bracket (18) along a first direction (Y) and a second direction (Z), the two directions (Y, Z) being perpendicular one in relation to the other, the fixture (8) including:
a gripping and supporting system (24) of the brackets (18);
fastening members (28, 30) of the fixture (8) on the reference element (4) along the first and second directions (Y, Z); and
- orienting the or each supporting bracket (18) in relation to the first and second directions (Y, Z) and in relation to a third direction (X) perpendicular to the first and second directions (Y, Z).

2. The fixture (8) according to Claim 1, in which the fixture (8) permits a displacement in translation of each supporting bracket (18) along the said third direction (X), the fastening members (28, 30) of the fixture (8) on the vehicle ensuring the fastening of the fixture (8) along the third direction (X).

3. The fixture (8) according to Claims 1 or 2, in which the fixture (8) includes at least two grip handles (36) extending preferably vertically.

4. The fixture (8) according to any one of Claims 1 to 3, in which the gripping and supporting system (24) includes a gripping jaw (40) of the brackets (18), the gripping jaw (40) having a tightened configuration for gripping of the bracket (18) and a loosened configuration for releasing of the bracket (18), the gripping and supporting system (24) including an actuating mechanism (42) of the gripping jaw (40) between the tightened and loosened configurations, the gripping jaw (40) preferably including two opposite mounted rotary branches (46).

5. The fixture (8) according to Claim 4, in which the actuating mechanism (42) includes an actuating lever (54) of the gripping jaw (40) towards its loosened configuration, and means for elastic stress (50) of the gripping jaw (40) towards its tightened configuration.

6. The fixture (8) according to Claim 5, taken together with Claim 5, in which the actuating lever (54) extends at a distance from the handle (36) such that it can be grasped by the fingers of the hand of an operator whilst keeping the palm of the hand on the handle (36).

7. The fixture (8) according to any one of Claims 1 to 6, in which the fastening members (28, 30) include two indexing pins (28) adapted to cooperate with corresponding orifices of the reference element (4) of the vehicle, the indexing pins (28) being preferably vertical and preferably projecting downwards in relation to a support surface (62) on the reference element (4).

8. The fixture (8) according to any one of Claims 1 to 7, in which the fastening members (28, 30) include two support plates (30) along the first and third directions (Y, X).

9. A method for putting in place supporting brackets (18) of a motor vehicle bumper (6), including a step of positioning the brackets (18) on the bumper beam (10), the positioning step being realized by means of a fixture (8) according to any one of Claims 1 to 8.

10. The method according to Claim 9, including a step of positioning the fixture (8) on a case of a motor-driven fan unit (4) of the vehicle.
